# EUROPÄISCHE PATENTSCHRIFT

(11) **EP 4 074 158 B1**
(45) Veröffentlichungstag und Bekanntmachung des Hinweises auf die Patenterteilung: **13.08.2025**
(21) Anmeldenummer: 22401007.4
(22) Anmeldetag: 25.03.2022
(51) Int. Cl.: A01C 7/08

(54) **VERTEILEINRICHTUNG FÜR EINE PNEUMATISCH ARBEITENDE LANDWIRTSCHAFTLICHE VERTEILMASCHINE**
DISTRIBUTING DEVICE FOR A PNEUMATIC AGRICULTURAL DISTRIBUTOR
DISPOSITIF DE DISTRIBUTION POUR UNE MACHINE PNEUMATIQUE D'ÉPANDAGE AGRICOLE

(30) Priorität: 14.04.2021 DE 102021109300
(43) Veröffentlichungstag der Anmeldung: 19.10.2022
(73) Patentinhaber: Amazonen-Werke H. Dreyer SE & Co. KG, 49205 Hasbergen (DE)
(72) Erfinder: Teckemeyer, Stephan, 49504 Lotte (DE); Wien, Thomas, 28816 Stuhr (DE); Meyer, Lars, 49733 Haren/Ems (DE)

(56) Entgegenhaltungen:
- EP-A1- 0 061 335
- EP-A1- 0 251 401
- DE-A1- 102019 128 863
- GB-A- 1 177 761

## Beschreibung

Die Erfindung betrifft eine Verteileinrichtung für eine pneumatisch arbeitende landwirtschaftliche Verteilmaschine nach dem Oberbegriff des Patentanspruchs 1 und ein Verfahren zum Betreiben einer Verteileinrichtung einer pneumatisch arbeitenden landwirtschaftlichen Verteilmaschine gemäß Patentanspruch

Eine derartige Verteileinrichtung ist in EP 0 061 335 A1 offenbart, wobei vier kreuzförmig angeordnete Leitelemente vorgesehen sind.

In einer Verteileinrichtung einer pneumatisch arbeitenden landwirtschaftlichen Verteilmaschine wird körniges Material, beispielsweise Saatgut, bisher per Zufall auf eine Mehrzahl von Abgängen verteilt, indem das körnige Material von einem Prallteller in einer Zufallsverteilung in Richtung der Abgänge abprallt. In einigen Ausbringsituationen, beispielsweise während einer Hangfahrt, kann bei den bisher eingesetzten Verteileinrichtungen aber keine gleichmäßige Verteilung des körnigen Materials auf die Abgänge gewährleistet werden. Die hangabwärts ausgerichteten Abgänge werden während einer Hangfahrt stärker mit dem körnigen Material beschickt als die hangaufwärts ausgerichteten Abgänge. Dies führt zu einer unbeabsichtigten ungleichmäßigen Materialausbringung.

Die Druckschriften DE 1 557 913 A und IT 20130030 A offenbaren jeweils eine Verteileinrichtung mit einer Verteilkammer, wobei in der Verteilkammer ein Verteilrotor angeordnet ist. Bei der in der Druckschrift DE 1 557 913 A offenbarten Verteileinrichtung sind Leitelemente des Verteilrotors lediglich entlang eines vergleichsweise kleinen Umfangsbereichs um einen Einströmbereich herum angeordnet, wodurch insbesondere bei geringen Rotationsgeschwindigkeiten des Verteilrotors die Längsverteilung des körnigen Materials auf der landwirtschaftlichen Nutzfläche negativ beeinflusst wird. In der IT 20130030 A prallt das einströmende körnige Material frontal auf den Verteilrotor, wodurch es aufgrund von Abprallern bei einer Vielzahl von körnigen Materialien zu einer erheblichen Ungleichverteilung kommen kann. Außerdem kann das körnige Material auch am Verteilrotor vorbeiströmen, sodass es nicht zu einer Mitnahme durch den Verteilrotor kommt. Insbesondere während einer Hangfahrt führt dies zu einer ungleichmäßigen Materialausbringung.

Die der Erfindung zugrundeliegende Aufgabe besteht somit darin, eine beabsichtigte Materialverteilung unabhängig von der Ausbringsituation, insbesondere während einer Hangfahrt und/oder einer Kurvenfahrt, gewährleisten zu können.

Die Aufgabe wird gelöst durch eine Verteileinrichtung mit den Merkmalen des Anspruchs 1.

Das körnige Material gleitet im Betrieb der landwirtschaftlichen Verteilmaschine an den Leitelementen des rotierenden Verteilrotors entlang und wird somit durch den Verteilrotor in Richtung der Auslässe der Verteilkammer bewegt. Die Auslässe der Verteilkammer sind auf einer um den Verteilrotor umlaufenden Kreisbahn angeordnet. Die Auslässe sind vorzugsweise gleichmäßig um den Verteilrotor herum angeordnet. Die Auslässe stehen vorzugsweise aufrecht, sodass jeder Auslass in einer Vertikalebene liegt. Alternativ liegen die Auslässe vorzugsweise waagerecht, so dass jeder Auslass in eine Horizontalebene liegt, wobei das körnige Material mittels eines Umlenkelements in die Auslässe verteilt werden kann.

Mittels des Verteilrotors wird das körnige Material mechanisch auf die Auslässe der Verteilkammer zwangsverteilt. Durch die mechanische Zwangsverteilung des körnigen Materials kann eine zuverlässige Verteilfunktion der Verteileinrichtung auch bei wechselnden Umständen, beispielsweise bei sich ändernder Maschinenneigung und/oder während einer Kurvenfahrt, und bei niedrigen Rotationsgeschwindigkeiten des Verteilrotors gewährleistet werden.

Der Einlass der Verteilkammer ist vorzugsweise mit einem Steigrohr verbunden. Das Steigrohr und der sich an den Einlass der Verteilkammer anschließende Einströmbereich sind vorzugsweise fluchtend zueinander ausgerichtet. Die mehreren Auslässe der Verteilkammer sind vorzugsweise mit Abgängen verbunden, welche wiederum mit Ablageeinrichtungen der landwirtschaftlichen Verteilmaschine verbunden sind, wobei die Ablageeinrichtungen zur Ablage des körnigen Materials auf eine landwirtschaftliche Nutzfläche dienen. Die Ablageeinrichtungen sind beispielsweise quer zur Fahrtrichtung nebeneinander angeordnete Säschare. Die Verteilkammer kann Bestandteil eines Verteilerkopfes der Verteileinrichtung sein.

In einer anderen Verteileinrichtung kann der Verteilrotor innerhalb des Steigrohres angeordnet sein. Eine entsprechende Verteileinrichtung kann ein oder mehrere zuvor und/oder nachfolgend beschriebene Merkmale aufweisen. Erfindungsgemäß ist unter dem Großteil des Umfangs des Einströmbereichs ein Umfangsanteil zu verstehen, welcher mehr als die Hälfte des Umfangs des Einströmbereichs umfasst, also sich über einen Winkelbereich von mehr als 180 Grad erstreckt. Bei einer vollumfänglichen Anordnung der Leitelemente um den Einströmbereich sind diese entlang des gesamten Umfangs des Einströmbereichs angeordnet. Gemäß eines Ausführungsbeispiels sind insbesondere auch drei oder vier gleichmäßig über den Umfang des Einströmbereichs verteilte Leitelemente oder Leitelemente, welche gemeinsam eine Y-Form oder eine X-Form ausbilden.

Es können auch Abschnitte, d. h. Teilbereiche, der Leitelemente zumindest über einen Großteil des Umfangs, insbesondere vollumfänglich, um den Einströmbereich herum angeordnet sein. Insofern können die Leitelemente auch eine sich in den Einströmbereich erstreckende Stern- oder Strahlenform bilden.

Das körnige Material kann beispielsweise Saatgut oder Dünger sein. Das körnige Material wird vorzugsweise über eine Luftströmung zu der Verteileinrichtung und durch die Verteileinrichtung transportiert. Der Transport erfolgt somit über eine Material-Luft-Strömung. Die Strömung kann also beispielsweise Saatgut-Luft-Strömung oder eine Dünger-Luft-Strömung sein. Die Anzahl der Leitelemente des Verteilrotors entspricht zumindest einem Viertel, vorzugsweise zumindest der Hälfte der Anzahl der Auslässe der Verteilkammer. Vorzugsweise stimmen die Anzahl der Leitelemente des Verteilrotors und die Anzahl der Auslässe der Verteilkammer überein.

In einer bevorzugten Ausführungsform der erfindungsgemäßen Verteileinrichtung sind mehrere oder sämtliche Leitelemente gleichmäßig um den Einströmbereich herum verteilt angeordnet. Durch eine gleichmäßige Anordnung der Leitelemente um den Einströmbereich herum kann auch bei geringen Rotationsgeschwindigkeiten des Verteilrotors eine Zwangsverteilung des körnigen Materials auf die Auslässe der Verteilkammer umgesetzt werden, bei welcher die Materialaufteilung auf die Auslässe auch während einer Hangfahrt äußerst gleichmäßig erfolgt. Die gleichmäßig um den Einströmbereich verteilten Leitelemente können strahlenförmig angeordnet sein. Der Winkelabstand jeweils benachbarter Leitelemente stimmt vorzugsweise im Wesentlichen überein.

In einer anderen bevorzugten Ausführungsform der erfindungsgemäßen Verteileinrichtung sind radial außenliegende Endabschnitte von mehreren oder sämtlichen Leitelementen auf einer gemeinsamen Kreisbahn angeordnet. Dadurch, dass radial innenliegende Endabschnitte von mehreren oder sämtlichen Leitelementen auf einer gemeinsamen Kreisbahn angeordnet sind und/oder radial außenliegende Endabschnitte von mehreren oder sämtlichen Leitelementen auf einer gemeinsamen Kreisbahn angeordnet sind, kann eine im Wesentlichen konstante Verweildauer des körnigen Materials in oder an dem Verteilrotor bzw. an dessen Leitelementen erreicht werden, wodurch sich eine gleichmäßige Materialverteilung über den Umfang ergibt. Einzelne Leitelemente können einen Radialversatz zueinander aufweisen. Die Leitelemente können identische oder unterschiedliche Längen und/oder Formen aufweisen.

Erfindungsgemäß sind radial innenliegende Endabschnitte einer ersten Gruppe von Leitelementen auf einer ersten gemeinsamen Kreisbahn angeordnet, wobei radial innenliegende Endabschnitte einer zweiten Gruppe von Leitelementen auf einer zweiten gemeinsamen Kreisbahn angeordnet sind. Die zweite Kreisbahn weist dabei einen größeren Durchmesser auf als die erste Kreisbahn. Da die Umfangsstrecke im Nahbereich des Einströmbereichs noch vergleichsweise kurz ist, ist es vorteilhaft, wenn sich nicht sämtliche, sondern lediglich mehrere Leitelemente einer ersten Gruppe bis in den Nahbereich des Einströmbereichs erstrecken. Mit zunehmendem Radialabstand von dem Einströmbereich vergrößert sich auch die Umfangsstrecke, sodass mit zunehmendem Radialabstand von dem Einströmbereich ausreichend Platz für weitere Leitelemente einer zweiten Gruppe von Leitelementen ist. Die Leitelemente der zweiten Gruppe sorgen für eine weitere Vergleichmäßigung der Materialverteilung über den Umfang.

In einer weiteren bevorzugten Ausführungsform der erfindungsgemäßen Verteileinrichtung sind mehrere oder sämtliche Leitelemente gekrümmt und/oder als Leitschaufeln ausgebildet. Über die Krümmung ist die Verweildauer der Körner an den Leitelementen beeinflussbar, sodass über die Krümmung der Leitelemente einstellbar ist, wo die Körner vom Zeitpunkt der Aufnahme gesehen abgeworfen werden. Die Leitschaufeln können, insbesondere zwischen zumindest zwei im Wesentlichen geraden Abschnitten, geknickt ausgeführt sein. Über die Stärke des Knicks, also den von den an den Knick anschließenden Abschnitten eingeschlossenen Winkel, ist die Verweildauer der Körner an den Leitschaufeln beeinflussbar, so dass über den Knick der Leitschaufeln einstellbar ist, wo die Körner vom Zeitpunkt der Aufnahme gesehen abgeworfen werden. Hierbei ist die Verweildauer der Körner desto größer, je stärker der Knick, also je kleiner der eingeschlossene Winkel auf der Seite ist an der die Körner entlanggleiten, ausgebildet ist. Die Leitelemente und/oder Leitschaufeln können rückwärts gekrümmt sein, um sich selbst anzutreiben bzw. um von der das körnige Material fördernden Luftströmung angetrieben zu werden. Die Leitelemente und/oder Leitschaufeln können alternativ vorwärts gekrümmt sein. In diesem Fall wird der Verteilrotor vorzugsweise von einem Rotorantrieb angetrieben. Ferner können die Leitelemente mehrere Krümmungsbereiche aufweisen, wobei die Krümmungsbereiche eines Leitelements unterschiedliche Krümmungen aufweisen können.

In einer anderen Ausführungsform der erfindungsgemäßen Verteileinrichtung weisen mehrere Leitelemente voneinander abweichende Formen, insbesondere voneinander abweichende Krümmungen auf. Alternativ weisen mehrere Leitschaufeln voneinander abweichende Knickungen auf. Bei einem außermittig liegenden Konzentrationsbereich des in den Einströmbereich einströmenden körnigen Materials können auf diese Weise weiterhin alle Abgänge gleichmäßig beschickt werden. Die Abwurfbereiche der einzelnen Leitelemente unterscheiden sich aufgrund der voneinander abweichenden Formen bzw. der voneinander abweichenden Krümmungen voneinander und decken gemeinsam vorzugsweise den gesamten Umfang ab. Die Krümmung der Leitelemente kann beispielsweise über einen Umfangsteilbereich hinweg zunehmen, wobei die Krümmung der Leitelemente über einen anderen Umfangsteilbereich hinweg wieder abnehmen kann.

In einer Weiterbildung der erfindungsgemäßen Verteileinrichtung weist der Verteilrotor einen, insbesondere umlaufenden Trägerkörper auf, von welchem die Leitelemente getragen werden. Der Trägerkörper kann beispielsweise eine Ringform oder eine Scheibenform aufweisen. Die Leitelemente und der Trägerkörper können integrale Bestandteile eines einstückigen Körpers sein. Alternativ können die Leitelemente form-, kraft- und/oder stoffschlüssig mit dem Trägerkörper verbunden sein.

In einer vorteilhaften Weiterbildung der erfindungsgemäßen Verteileinrichtung sind die Leitelemente zwischen einer Deckelplatte und einer Bodenplatte des Verteilrotors angeordnet. Die Deckelplatte weist vorzugsweise eine der Bodenplatte zugewandte Begrenzungsfläche auf, welche zumindest abschnittsweise den Strömungsbereich für das körnige Material innerhalb des Verteilrotors nach oben hin begrenzt. Die Bodenplatte weist vorzugsweise eine der Deckelplatte zugewandte Begrenzungsfläche auf, welche zumindest abschnittsweise den Strömungsbereich für das körnige Material innerhalb des Verteilrotors nach unten hin begrenzt. Die Deckelplatte und/oder die Bodenplatte können Bestandteile des Trägerkörpers sein. Die Deckelplatte kann beispielsweise eine obere Trägerplatte sein, wobei die Bodenplatte eine untere Trägerplatte sein kann. Die Begrenzungsfläche der Deckelplatte ist vorzugsweise geschlossen. Die Bodenplatte weist vorzugsweise eine ringförmige Begrenzungsfläche auf. Das körnige Material muss zwangsweise zwischen den Begrenzungsflächen der Deckelplatte und der Bodenplatte entlang strömen und wird dadurch von einem der Leitelemente mitgenommen.

In einer weiteren Ausführungsform der erfindungsgemäßen Verteileinrichtung weisen mehrere Leitelemente voneinander abweichende Höhen auf. Vorzugsweise weist eine erste Gruppe von Leitelementen eine erste Höhe auf und eine zweite Gruppe von Leitelementen eine zweite Höhe auf, wobei die erste Höhe und die zweite Höhe sich voneinander unterscheiden. Insbesondere erstreckt sich die erste oder zweite Gruppe von Leitelementen nicht von der Bodenplatte bis zur Deckelplatte oder von der Deckelplatte bis zur Bodenplatte, so dass sich durch die voneinander abweichenden Höhen ein zusätzlicher Freiraum zwischen den Leitelementen mit verringerter Höhe und der Deckelplatte oder Bodenplatte ergibt.

Die Verteileinrichtung umfasst vorzugsweise ein Verteilergehäuse. In dem Verteilergehäuse befindet sich vorzugsweise die Verteilkammer. Zwischen einer oberen Innenfläche des Verteilergehäuses und der Deckelplatte des Verteilrotors kann ein sich nach außen verbreitender Spalt vorgesehen sein. Zwischen einer unteren Innenfläche des Verteilergehäuses und der Bodenplatte des Verteilrotors kann ein sich in Radialrichtung nach außen verbreitender Spalt vorgesehen sein. Das Verteilergehäuse weist vorzugsweise einen Gehäusedeckel auf. Der Gehäusedeckel des Verteilergehäuses kann zerstörungsfrei abnehmbar sein, sodass der Verteilrotor oder die Verteilkammer gereinigt werden können. Der Verteilrotor kann bei geöffnetem Gehäusedeckel zerstörungsfrei aus der Verteilkammer entnehmbar sein. Auf diese Weise kann der Verteilrotor beispielsweise zu Reinigungs- oder Wartungszwecken entnommen werden. Ferner erlaubt die zerstörungsfreie Entnehmbarkeit des Verteilrotors den Einsatz eines Ersatzrotors, welcher beispielsweise auf das Verteilen eines spezifischen Materials angepasst ist.

Die erfindungsgemäße Verteileinrichtung wird ferner durch eine Steuerungseinrichtung weitergebildet, welche dazu eingerichtet ist, einen Rotorantrieb des Verteilrotors und/oder die Rotationsgeschwindigkeit des Verteilrotors in Abhängigkeit der Neigung der Verteileinrichtung oder der Verteilmaschine und/oder in Abhängigkeit der Fahrgeschwindigkeit zu steuern. Vorzugsweise weist die Verteileinrichtung einen Rotorantrieb auf, über welchen der Verteilrotor rotatorisch antreibbar ist. Der Rotorantrieb kann ein Elektromotor sein. Der Rotorantrieb kann ein hydraulischer oder pneumatischer Antrieb sein. Zwischen dem Rotorantrieb und dem Verteilrotor kann ein Getriebe angeordnet sein.

In einer weiteren bevorzugten Ausführungsform der erfindungsgemäßen Verteileinrichtung ragt ein Prallkörper in den Einströmbereich hinein, wobei der Prallkörper dazu eingerichtet ist, eine Vorverteilung des in die Verteilkammer einströmenden körnigen Materials in Richtung der Leitelemente und/oder eine Zentrierung einer das körnige Material umfassenden Material-Luft-Strömung zu verursachen. Der Prallkörper kann beispielsweise eine Leitkuppel sein. Die mit den Auslässen verbundenen Abgänge können in Radialrichtung ausgerichtet sein. Alternativ können sich die mit den Auslässen verbundenen Abgänge in Richtung der Resultierenden aus radialer und tangentialer Geschwindigkeit des körnigen Materials an die Auslässe anschließen.

Es ist darüber hinaus eine erfindungsgemäße Verteileinrichtung bevorzugt, welche eine Materialrückführeinrichtung aufweist. Die Materialrückführeinrichtung ist vorzugsweise dazu eingerichtet, dass auf die Auslässe der Verteilkammer verteilte körnige Material zumindest teilweise zu dem Einlass der Verteilkammer zurückzuführen. Die Rückführung erfolgt vorzugsweise über ein Steigrohr, welches mit dem Einlass der Verteilkammer verbunden ist. Die Materialrückführeinrichtung lässt sich vorzugsweise auslass-individuell schalten, sodass das auf einzelne Auslässe der Verteilkammer verteilte körnige Material zumindest teilweise zu dem Einlass der Verteilkammer zurückgeführt werden kann. Auf diese Weise kann die Materialausbringung durch einzelne Ablageeinrichtungen temporär unterbrochen werden, beispielsweise in keilförmigen Randbereichen der landwirtschaftlichen Nutzfläche oder im Übergang zum Vorgewende. Die Materialrückführeinrichtung erlaubt eine gleichmäßige Materialaufteilung auch dann, wenn einzelnen Ablageeinrichtungen temporär kein körniges Material zur Verfügung gestellt werden soll.

Die Position des Verteilrotors kann über eine Verstellmechanik längs und/oder quer zur Fahrtrichtung innerhalb der Verteilkammer einstellbar sein. Dies kann insbesondere dann vorteilhaft sein, wenn Auslässe temporär mit einer unterschiedlichen Menge des körnigen Materials beschickt werden sollen. Dies ist insbesondere während der Kurvenfahrt der Fall. Während der Kurvenfahrt sollen den kurveninneren Ablageeinrichtungen weniger körniges Material zugeleitet werden als den kurvenäußeren Ablageeinrichtungen. Durch eine Positionsveränderung des Verteilrotors innerhalb der Verteilkammer kann diese Ungleichverteilung während der Kurvenfahrt umgesetzt werden.

In einer anderen Verteileinrichtung kann der Verteilrotor eine Mehrzahl von sich nach außen erstreckenden Leitelementen aufweisen, welche zumindest über einen Winkelbereich von 30 Grad, vorzugsweise zumindest über einen Winkelbereich von 45 Grad, um einen sich an den Einlass der Verteilkammer anschließenden Einströmbereich in der Verteilkammer herum angeordnet sind.

Eine entsprechende Verteileinrichtung kann ein oder mehrere zuvor beschriebene Merkmale aufweisen.

Die der Erfindung zugrundeliegende Aufgabe wird ferner durch ein Verfahren nach Anspruch 10 gelöst, wobei das körnige Material im Rahmen des erfindungsgemäßen Verfahrens durch eine Mehrzahl von Leitelementen des Verteilrotors, welche um einen sich an den Einlass der Verteilkammer anschließenden Einströmbereich in der Verteilkammer herum angeordnet sind, derart geführt wird, dass das körnige Material gleichzeitig entlang zumindest eines Großteils des Umfangs, insbesondere entlang des gesamten Umfangs, des Verteilrotors in Richtung der mehreren Auslässe der Verteilkammer abgegeben wird.

Das erfindungsgemäße Verfahren wird vorzugsweise zum Betreiben einer Verteileinrichtung nach einer der vorstehend beschriebenen Ausführungsformen eingesetzt. Hinsichtlich der Vorteile und Modifikationen des erfindungsgemäßen Verfahrens wird zunächst auf die Vorteile und Modifikationen der erfindungsgemäßen Verteileinrichtung verwiesen.

In einer bevorzugten Ausführungsform des erfindungsgemäßen Verfahrens wird ein den Verteilrotor antreibender Rotorantrieb der Verteileinrichtung und/oder die Rotationsgeschwindigkeit des Verteilrotors in Abhängigkeit der aktuellen Ausbringsituation gesteuert. Die Rotationsgeschwindigkeit des Verteilrotors wird durch die Steuerungseinrichtung vorzugsweise selbsttätig, d.h. ohne einen Bedienereingriff, an die aktuelle Ausbringsituation angepasst.

In einer anderen bevorzugten Ausführungsform des erfindungsgemäßen Verfahrens wird beim Steuern des Rotorantriebs und/oder der Rotationsgeschwindigkeit des Verteilrotors in Abhängigkeit der aktuellen Ausbringsituation die Bestromung des Rotorantriebs und/oder die Rotationsgeschwindigkeit des Verteilrotors an die Neigung der Verteileinrichtung oder der Verteilmaschine oder an die Fahrgeschwindigkeit angepasst. Somit kann auch bei Hangfahrten eine gleichmäßige Verteilung oder eine beabsichtigte ungleichmäßige Verteilung des körnigen Materials auf die Ausgänge der Verteilkammer und somit auf die Ablageeinrichtungen, welche mit den Ausgängen der Verteilkammer verbunden sind, umgesetzt werden.

In einer weiteren bevorzugten Ausführungsform des erfindungsgemäßen Verfahrens wird das körnige Material durch die Leitelemente des Verteilrotors derart geführt, dass das körnige Material in einer vorbestimmten Mengenverteilung in Richtung der Auslässe abgegeben wird. Die vorbestimmte Mengenverteilung kann eine ungleichmäßige oder eine gleichmäßige Verteilung sein. Die vorbestimmte Mengenverteilung kann derart gewählt werden, dass nicht an allen Auslässen über ein vorbestimmtes Zeitintervall die gleiche Menge ankommt. Die Mengenverteilung und vorzugsweise das Zeitintervall können derart gewählt sein, dass während einer Kurvenfahrt einer pneumatisch arbeitenden Verteilmaschine die Menge an körnigem Material der Kurvengeschwindigkeit von quer zur Fahrtrichtung angeordneten Ablageeinrichtungen angepasst ist. Die quer zur Fahrtrichtung angeordneten Ablageeinrichtungen können nebeneinander angeordnete Säschare sein.

Nachfolgend werden bevorzugte Ausführungsformen der Erfindung unter Bezugnahme auf die beiliegenden Zeichnungen näher erläutert und beschrieben. Dabei zeigen:
- Fig. 1: eine landwirtschaftliche Verteilmaschine mit einer erfindungsgemäßen Verteileinrichtung in einer perspektivischen Darstellung;
- Fig. 2: ein Ausführungsbeispiel der erfindungsgemäßen Verteileinrichtung in einer schematischen Darstellung;
- Fig. 3: ein weiteres Ausführungsbeispiel der erfindungsgemäßen Verteileinrichtung in einer schematischen Darstellung;
- Fig. 4: die in der Fig. 3 abgebildete Verteileinrichtung in einer perspektivischen Darstellung;
- Fig. 5: die Körnerverteilung auf die Auslässe der Verteilkammer bei einer aus dem Stand der Technik bekannten Verteileinrichtung während einer Hangfahrt;
- Fig. 6: die Körnerverteilung auf die Auslässe der Verteilkammer bei der erfindungsgemäßen Verteileinrichtung während einer Hangfahrt;
- Fig. 7: ein weiteres Ausführungsbeispiel der erfindungsgemäßen Verteileinrichtung in einer schematischen Schnittdarstellung;
- Fig. 8: eine Detaildarstellung der in der Fig. 7 abgebildeten Verteileinrichtung;
- Fig. 9: ein weiteres Ausführungsbeispiel der erfindungsgemäßen Verteileinrichtung in einer schematischen Schnittdarstellung;
- Fig. 10: ein weiteres Ausführungsbeispiel der erfindungsgemäßen Verteileinrichtung in einer schematischen Schnittdarstellung;
- Fig. 11: ein weiteres Ausführungsbeispiel der erfindungsgemäßen Verteileinrichtung in einer schematischen Schnittdarstellung; und
- Fig. 12: ein Verbund aus Fahrzeug und Verteilmaschine während des Ausbringens von körnigem Material auf eine landwirtschaftliche Nutzfläche.

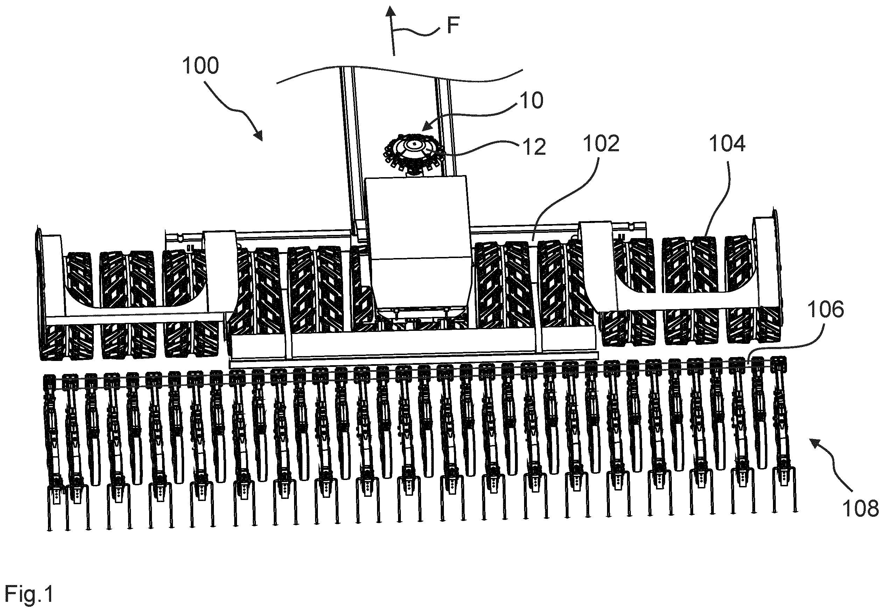

Die Fig. 1 zeigt eine als Sämaschine ausgebildete landwirtschaftliche Verteilmaschine 100. Die Verteilmaschine 100 weist einen Maschinenrahmen 102 auf, welcher an einem landwirtschaftlichen Fahrzeug, insbesondere an einem Traktor, befestigt werden kann. Die Befestigung erfolgt beispielsweise über einen Dreipunktkraftheber oder eine andere Kupplungsvorrichtung. An dem Maschinenrahmen 102 sind mehrere quer zur Fahrtrichtung nebeneinander angeordnete Räder 104 angebracht. In Fahrrichtung F hinter den Rädern 104 ist ein Querbalken 106 angeordnet. Der Querbalken 106 erstreckt sich quer zur Fahrrichtung F, wobei an dem Querbalken 106 mehrere als Säschare ausgebildete Ablageeinrichtungen 108 angeordnet sind. Die Ablageeinrichtungen 108 dienen zum Ablegen von körnigem Material, vorliegend Saatgut, auf eine landwirtschaftliche Nutzfläche.

Das körnige Material M wird über die Verteileinrichtung 10 auf die Ablageeinrichtungen 108 der Verteilmaschine 100 verteilt. Die Verteileinrichtung 10 weist ein Verteilergehäuse 12 auf und ist mit dem Maschinenrahmen 102 verbunden. Die Verteileinrichtung 10 ist über mehrere Schläuche mit den Ablageeinrichtungen 108 verbunden, wobei die Schläuche aus Übersichtsgründen in der Fig. 1 ausgeblendet sind.

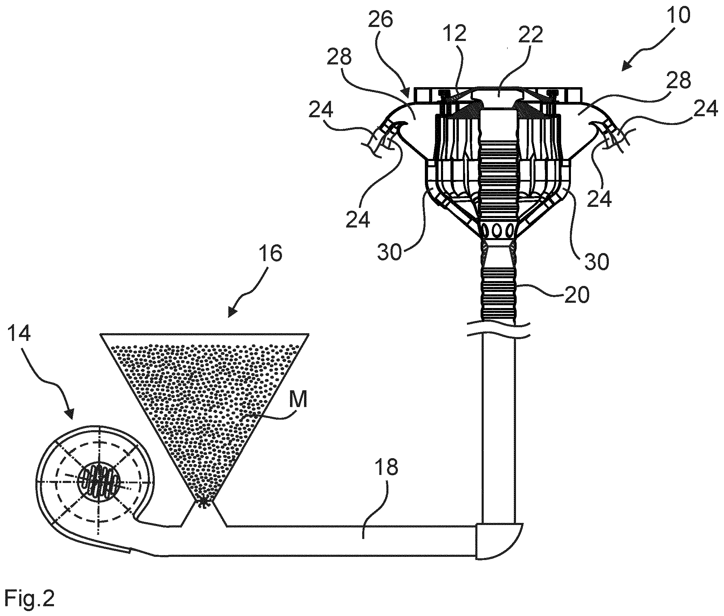

Die Fig. 2 zeigt, dass das körnige Material M in einem Vorratsbehälter 16 der Verteileinrichtung 10 bevorratet wird, wobei über ein Gebläse 14 der Verteileinrichtung 10 eine Luft-Material-Strömung zum Transportieren des körnigen Materials M erzeugt wird. Das körnige Material M wird über eine Zuführleitung 18 und ein Steigrohr 20 in eine Verteilkammer 22 des Verteilergehäuses 12 geleitet. Das körnige Material M wird innerhalb der Verteilkammer 22 auf mehrere Angänge 24 aufgeteilt, wobei die Abgänge 24 um die Verteilkammer 22 herum angeordnet sind. Die Abgänge 24 sind jeweils mit einer als Säschar ausgebildeten Ablageeinrichtung 108 verbunden, sodass das in der Verteilkammer 22 auf die Abgänge 24 aufgeteilte körnige Material M zu den mehreren Ablageeinrichtungen 108 der Verteilmaschine 100 geleitet wird.

Die Verteileinrichtung 10 weist ferner eine Materialrückführeinrichtung 26 auf, mittels welcher das körnige Material M zurück in das Steigrohr 20 geleitet werden kann. Die Materialrückführeinrichtung 26 umfasst mehrere Abzweigorgane 28, wobei die Abzweigorgane 28 zwischen der Verteilkammer 22 und den Abgängen 24 angeordnet sind. Die Abzweigorgane 28 können zwischen einem Rückführzustand und einem Durchleitungszustand umgeschaltet werden. Die Umschaltung der Abzweigorgane 28 kann über eine Steuerungseinrichtung der Verteilmaschine 100 erfolgen. In dem Durchleitungszustand wird das aus der Verteilkammer in das jeweilige Abzweigorgan 28 eingeleitete körnige Material M an den mit dem Abzweigorgan 28 verbundenen Abgang 24 durchgeleitet, sodass eine Weiterleitung des körnigen Materials M an die jeweilige Ablageeinrichtung 108 erfolgt. Wenn sich ein Abzweigorgan 28 in einem Rückführzustand befindet, wird das von der Verteilkammer 22 in das Abzweigorgan 28 eingeleitete körnige Material M teilweise oder vollständig über eine mit dem Abzweigorgan 28 verbundene Rückführleitung 30 zurück in das Steigrohr 20 geleitet. Auf diese Weise kann die Zuleitung von körnigem Material M an eine oder mehrere Ablageeinrichtungen 108 temporär teilweise oder vollständig unterbrochen werden. Somit kann die Saatgutausbringung reihenindividuell gesteuert werden.

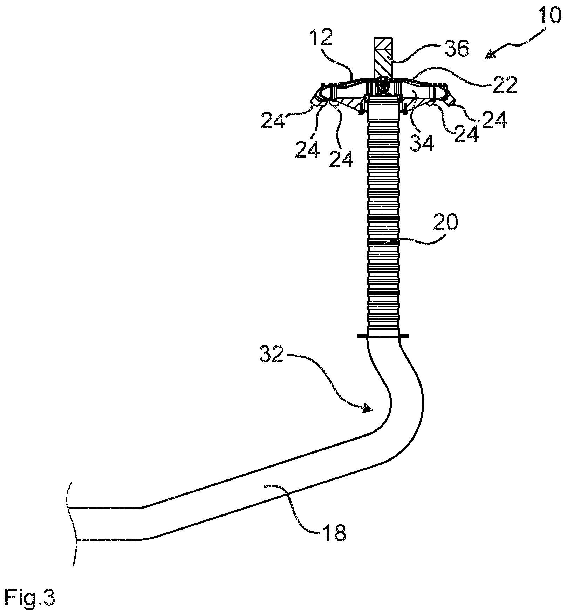

Die Fig. 3 zeigt eine Verteileinrichtung 10, bei welcher die Zuführleitung 18 einen Überschwingungsabschnitt 32 aufweist, bevor die Zuführleitung 18 in das als Wellrohr ausgebildete Steigrohr 20 übergeht. Der Überschwingungsabschnitt 32 sorgt für eine gleichmäßigere Materialströmung innerhalb des Steigrohrs 20.

In dem Verteilergehäuse 12 der Verteileinrichtung 10 ist ein Verteilrotor 34 angeordnet, welcher von einem Rotorantrieb 36 rotatorisch angetrieben wird. Der Rotorantrieb 36 ist in dem dargestellten Ausführungsbeispiel ein Elektromotor. Der Verteilrotor 34 ist dazu eingerichtet, im Betrieb der Verteilmaschine 100 eine Rotationsbewegung auszuführen und in die Verteilkammer 22 einströmendes körniges Material M auf die Abgänge 24 zu verteilen.

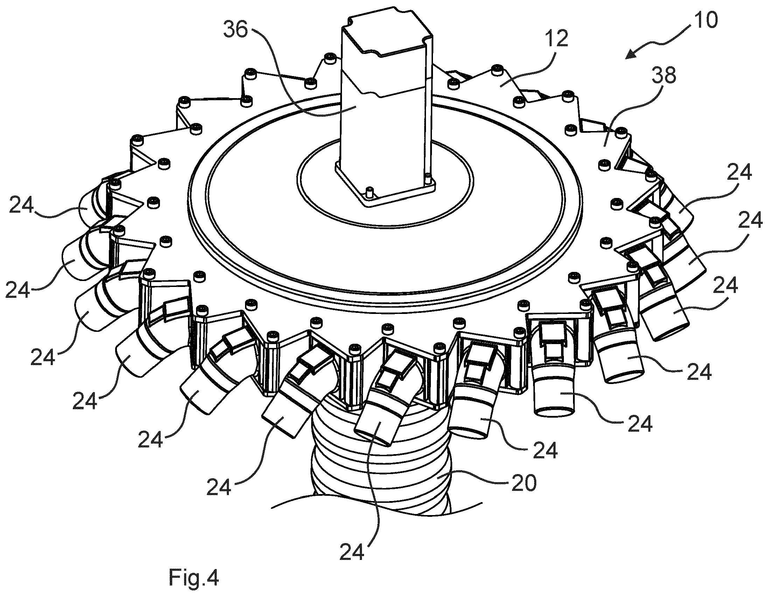

Die Fig. 4 zeigt, dass das Verteilergehäuse 12 einen Gehäusedeckel 38 aufweist. Der Gehäusedeckel 38 kann zerstörungsfrei abnehmbar sein, sodass die unterhalb des Gehäusedeckels 38 liegende Verteilkammer 22 zugänglich wird. Der in der Verteilkammer 22 angeordnete Verteilrotor 34 kann bei geöffnetem Gehäusedeckel 38 aus dem Verteilergehäuse 12 entnommen werden.

Der Rotorantrieb 36 ist an dem Gehäusedeckel 38 befestigt und ist fluchtend zu dem Steigrohr 20 ausgerichtet.

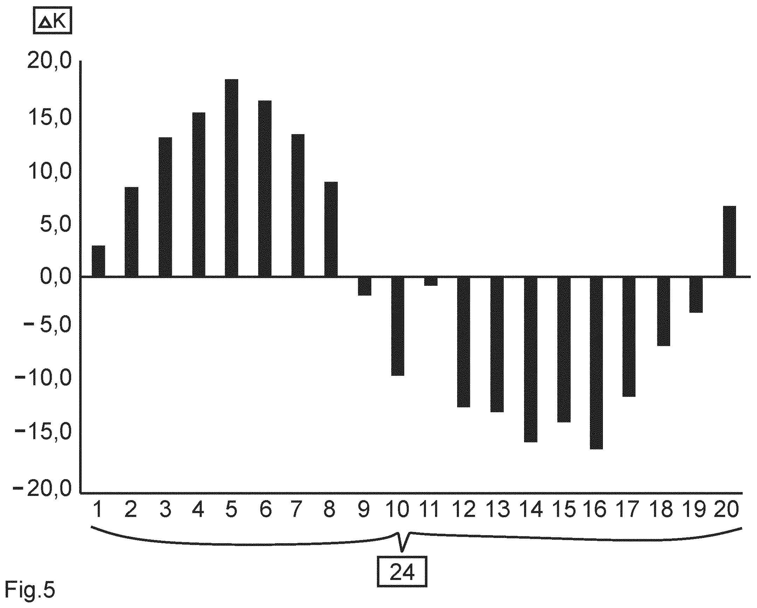

Durch die spezifische Ausbildung des Verteilrotors 34 wird eine mechanische Zwangsverteilung des körnigen Materials M auf die Abgänge 24 erreicht, wodurch vermieden wird, dass während einer Hangfahrt hangabwärts ausgerichtete Abgänge 24 stärker beschickt werden als hangaufwärts ausgerichtete Abgänge 24, wie es in der Fig. 5 dargestellt ist. Die Fig. 5 zeigt eine normierte Kornverteilung auf 20 um eine Verteilkammer herum angeordnete Abgänge 24 einer Verteileinrichtung aus dem Stand der Technik. Die Abgänge 1-8 und 20 sind hangabwärts ausgerichtet. Die Abgänge 9-19 sind hangaufwärts ausgerichtet. Die auf der Y-Achse aufgetragene Korndifferenz ΔK zeigt, dass die Neigung der Verteileinrichtung bzw. die Neigung der Verteilmaschine einen erheblichen Einfluss auf die Gleichmäßigkeit der Materialverteilung in einer Verteileinrichtung hat.

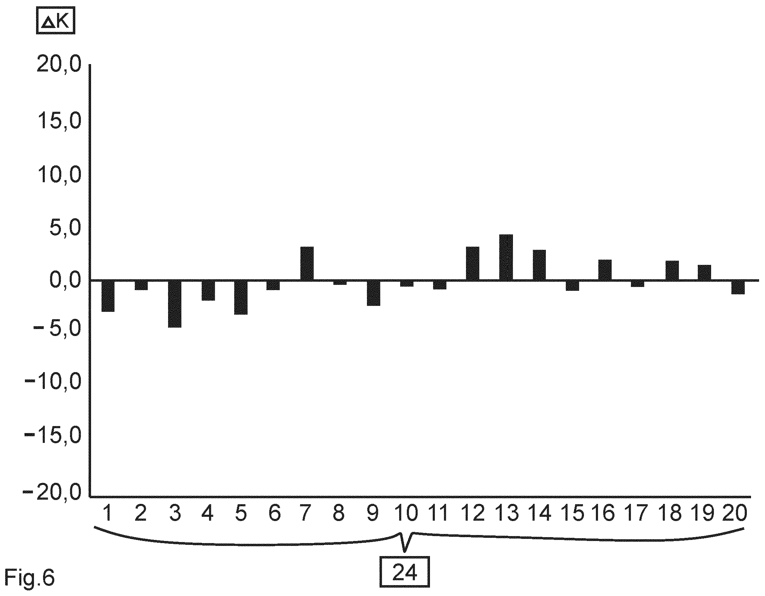

Die Fig. 6 zeigt die Aufteilung des körnigen Materials M auf 20 Abgänge 24 einer erfindungsgemäßen Verteileinrichtung 10 während einer Hangfahrt. Aufgrund der mechanischen Zwangsverteilung des körnigen Materials M, welche über den Verteilrotor 34 innerhalb der Verteilkammer 22 umgesetzt wird, kann eine zuverlässige und gleichmäßige Materialverteilung auf die Abgänge 24 auch während einer Hangfahrt gewährleistet werden. Die aus dem Stand der Technik bekannte bevorzugten Beschickung der hangabwärts ausgerichteten Abgänge 24 bei gleichzeitig reduzierter Beschickung der hangaufwärts ausgerichteten Abgänge 24 wird durch die mechanische Zwangsverteilung in der erfindungsgemäßen Verteileinrichtung 10 effektiv vermieden. Die Korndifferenzen ΔK befinden sich während einer Hangfahrt bei Verwendung der erfindungsgemäßen Verteileinrichtung auf einem Niveau, welches bisher nur bei Ausbringvorgängen auf ebenen Flächen erzielt werden konnte.

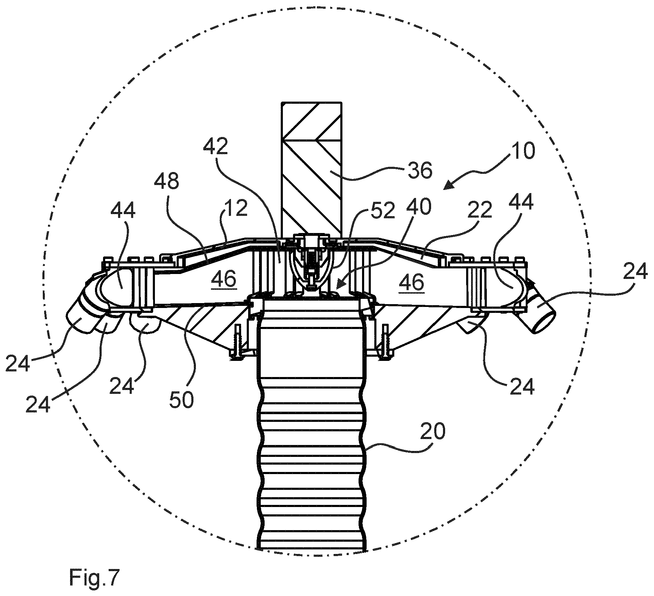

Die Fig. 7 zeigt, dass der in der Verteilkammer 22 angeordnete Verteilrotor 34 eine Mehrzahl von sich nach außen erstreckenden Leitelementen 46 aufweist. Die Leitelemente 46 sind als Leitschaufeln ausgebildet und sind vollumfänglich um einen Einströmbereich 42 in der Verteilkammer 22 herum angeordnet. Der Einströmbereich 42 schließt sich an einen Einlass 40 der Verteilkammer 22 an, wobei der Einlass 40 mit dem Steigrohr 20 verbunden ist. Die Abgänge 24 sind mit Auslässen 44 der Verteilkammer 22 verbunden. Mittels des Verteilrotors 34 wird also das über den Einlass 40 in die Verteilkammer 22 einströmende körnige Material M auf die Auslässe 44 der Verteilkammer 22 verteilt. Dabei gleitet im Betrieb der Verteilmaschine 100 das körnige Material M an den Leitelementen 46 des rotierenden Verteilkörpers 34 entlang. Nachdem das körnige Material M von den Leitelementen 46 abgeschleudert wurde, tritt dieses in die Auslässe 44 ein, welche entlang des Umfangs des Verteilrotors 34 angeordnet sind. Das Verteilergehäuse 12 ist Bestandteil eines Verteilerkopfes, in welchen das Steigrohr 20 mündet.

Die Verteileinrichtung 10 weist ferner einen in den Einströmbereich 42 hineinragenden Prallkörper 52 auf, wobei der Prallkörper 52 als Leitkuppel ausgebildet ist. Der Prallkörper 52 verursacht eine Vorverteilung des in die Verteilkammer 22 einströmenden körnigen Materials M in Richtung der Leitelemente 46. Ferner erlaubt der Prallkörper 52 eine Zentrierung einer das körnige Material M umfassenden Material-Luft-Strömung.

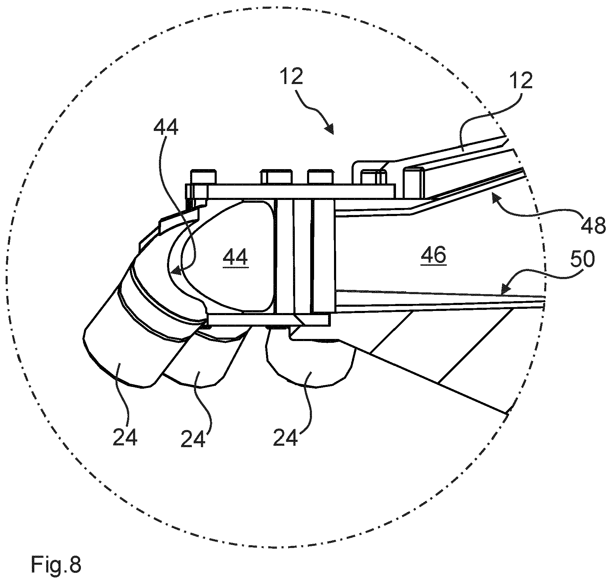

Wie in der Fig. 8 dargestellt, weist der Verteilrotor 34 eine Deckelplatte 48 und eine Bodenplatte 50 auf. Die Leitelemente 46 sind zwischen der Deckelplatte 48 und der Bodenplatte 50 angeordnet. Die Deckelplatte 48 weist eine der Bodenplatte 50 zugewandte Begrenzungsfläche auf, welche den Strömungsbereich für das körnige Material M innerhalb des Verteilrotors 34 nach oben hin begrenzt. Die Bodenplatte 50 weist eine der Deckelplatte 48 zugewandte Begrenzungsfläche auf, welche den Strömungsbereich für das körnige Material M innerhalb des Verteilrotors 34 nach unten hin begrenzt. Die Deckelplatte 48 und die Bodenplatte 50 sind Bestandteile eines Trägerkörpers 56, von welchem die Leitelemente 46 getragen werden. Zwischen einer oberen Innenfläche des Verteilergehäuses 12 und der Deckelplatte 48 des Verteilrotors 34 ist ein sich nach außen verbreitender Spalt vorgesehen. Zwischen einer unteren Innenfläche des Verteilergehäuses 12 und der Bodenplatte 50 des Verteilrotors 34 ist ein sich in Radialrichtung nach außen verbreitender Spalt vorgesehen.

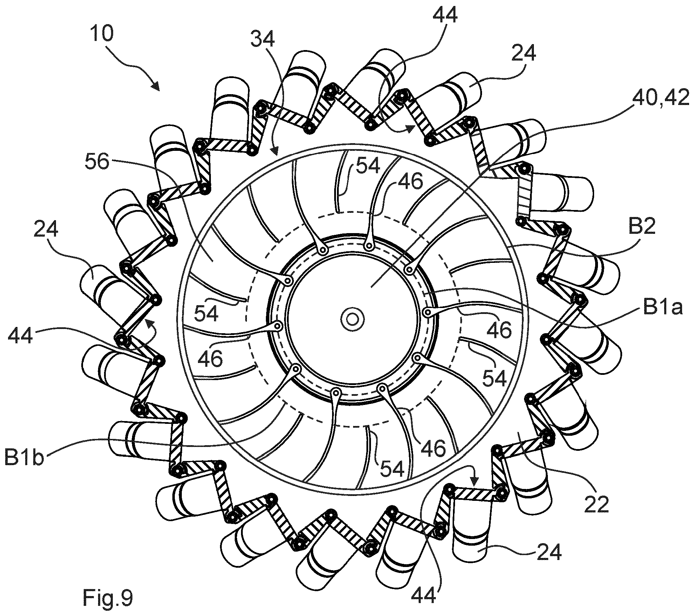

Die Fig. 9 zeigt eine Verteileinrichtung 10 mit einem Verteilrotor 34, bei welchem mehrere sich nach außen erstreckende Leitelemente 46, 54 vollumfänglich um den Einströmbereich 42 in der Verteilkammer 22 herum angeordnet sind. Die Leitelemente 46, 54 sind in dem dargestellten Ausführungsbeispiel gleichmäßig um den Einströmbereich 42 herum verteilt angeordnet. Die Leitelemente 46, 54 sind gekrümmte Leitschaufeln, wobei die Leitelemente 54 kürzer ausgebildet sind als die Leitelemente 46 und einen Radialversatz zu diesen aufweisen.

Die radial innenliegenden Endabschnitte der Leitelemente 46 sind auf einer gemeinsamen Kreisbahn B1a angeordnet. Die radial innenliegenden Endabschnitte der Leitelemente 54 sind auf einer gemeinsamen Kreisbahn B1b angeordnet. Die radial außenliegenden Endschnitte sämtlicher Leitelemente 46, 54 sind auf der gemeinsamen Kreisbahn B2 angeordnet. Der Durchmesser der Kreisbahn B2 ist größer als der Durchmesser der Kreisbahn B1b. Der Durchmesser der Kreisbahn B1b ist größer als der Durchmesser der Kreisbahn B1a.

Die Leitelemente 46 weisen jeweils übereinstimmende Formen und Längen auf. Die Leitelemente 54 weisen ebenfalls übereinstimmende Formen und Längen auf. Zwischen zwei langen Leitelementen 46 ist jeweils ein kurzes Leitelement 54 angeordnet.

Die mit den Auslässen 44 verbundenen Abgänge 24 schließen sich in Richtung einer Resultierenden aus radialer und tangentialer Geschwindigkeit des körnigen Materials M an die Auslässe 44 an.

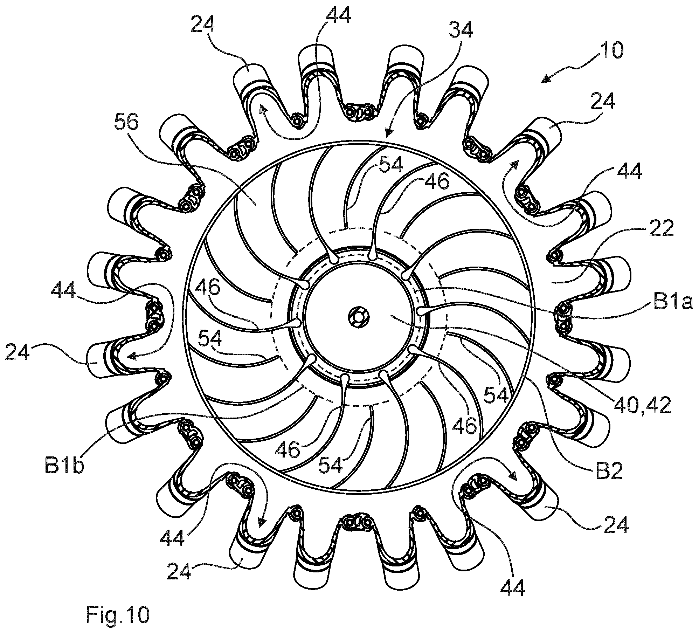

Die Fig. 10 zeigt ein Ausführungsbeispiel, bei welchem ebenfalls der in der Fig. 9 dargestellte Verteilrotor 34 zum Einsatz kommt. Die mit den Auslässen 44 verbundenen Abgänge 24 sind in diesem Fall jedoch in Radialrichtung ausgerichtet. Somit gehen die Abgänge 24 strahlenförmig von der Mittelachse bzw. der Rotationsachse des Verteilrotors 34 nach außen weg.

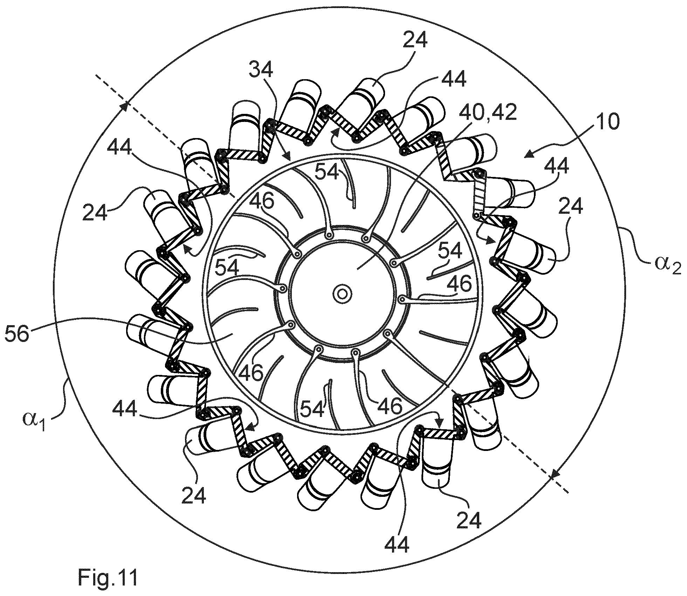

Die Fig. 11 zeigt eine Verteileinrichtung 10, bei welcher die Leitelemente 46, 54 des Verteilrotors 34 voneinander abweichende Formen, nämlich voneinander abweichende Krümmungen, aufweisen. Die Krümmung der Leitelemente 46, 54 nimmt über den Umfangsbereich α₁ hinweg zu, wobei sich der Umfangsbereich α₁ über einen Winkelbereich von 180 Grad erstreckt. Die Krümmung der Leitelemente 46, 54 nimmt über den Umfangsbereich α₂ hinweg wieder ab, wobei sich der Umfangsbereich α₂ über einen Winkelbereich von 180 Grad erstreckt. Durch die voneinander abweichenden Krümmungen der Leitelemente 46, 54 können bei einem außermittig in den Einströmbereich 42 einströmenden körnigen Material M weiterhin alle Abgänge 24 gleichmäßig beschickt werden.

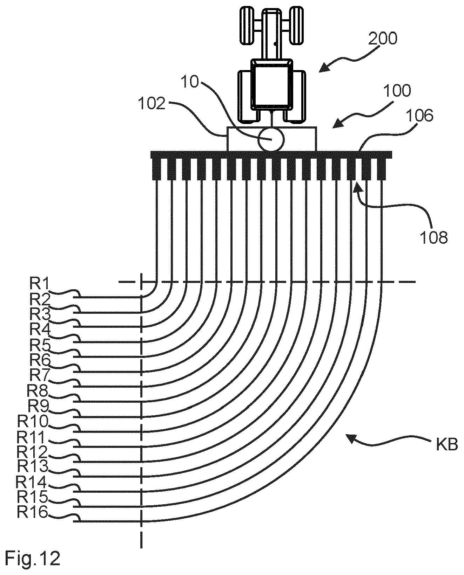

Die Fig. 12 zeigt ein als Traktor ausgebildetes Fahrzeug 200, an welchem eine als Sämaschine ausgebildete Verteilmaschine 100 angebaut ist. Die Verteilmaschine 100 kann von dem Fahrzeug 200 gezogen oder getragen werden.

An dem Querbalken 106 der Verteilmaschine 100 sind mehrere in Querrichtung nebeneinander angeordnete und als Säschare ausgebildete Ablageeinrichtungen 108 angeordnet. Über die mehreren Ablageeinrichtungen 108 wird das körnige Material, vorliegend Saatgut, entlang von Reihen R1-R16 auf die landwirtschaftliche Nutzfläche ausgebracht. Jeder Ablageeinrichtung 108 ist dabei eine Reihe R1-R16 zugeordnet.

Während der Ausbringung von körnigem Material kommt es regelmäßig vor, dass Kurvenbereiche KB durchfahren werden müssen. Während der Kurvenfahrt sind die kurveninneren Ablageeinrichtungen 108 mit einer geringeren Menge an körnigem Material zu beschicken als die kurvenäußeren Ablageeinrichtungen 108, sodass entlang der Reihen R1-R16 auch innerhalb des Kurvenbereichs KB übereinstimmende Ablagemengen erzielt werden.

Eine von der kurveninneren Reihe R1 bis zur kurvenäußeren Reihe R16 ansteigende Materialbeschickung der den jeweiligen Reihen R1-R16 zugeordneten Ablageeinrichtungen 108 kann dadurch erreicht werden, dass die Position des Verteilrotors 34 in Längs- und/oder Querrichtung innerhalb der Verteilkammer 22 veränderbar ist. Durch eine entsprechende Positionierung des Verteilrotors 34 innerhalb der Verteilkammer 22 kann eine beabsichtigte Ungleichverteilung des körnigen Materials M auf die Auslässe 44 erreicht werden, wobei die Auslässe 44 über die Abgänge 24 mit den Ablageeinrichtungen 108 verbunden sind.

Die Positionierung des Verteilrotors 34 innerhalb der Verteilkammer 22 kann beispielsweise mit einem Positionierantrieb erfolgen, welcher über eine Steuerungseinrichtung der Verteilmaschine 100 steuerbar ist. Der Positionierantrieb kann beispielsweise ein Elektromotor, ein hydraulischer oder pneumatischer Antrieb sein.

### Bezugszeichen

- 10: Verteileinrichtung
- 12: Verteilergehäuse
- 14: Gebläse
- 16: Vorratsbehälter
- 18: Zuführleitung
- 20: Steigrohr
- 22: Verteilkammer
- 24: Abgänge
- 26: Materialrückführeinrichtung
- 28: Abzweigorgane
- 30: Rückführleitungen
- 32: Überschwingungsabschnitt
- 34: Verteilrotor
- 36: Rotorantrieb
- 38: Gehäusedeckel
- 40: Einlass
- 42: Einströmbereich
- 44: Auslässe
- 46: Leitelemente
- 48: Deckelplatte
- 50: Bodenplatte
- 52: Prallkörper
- 54: Leitelemente
- 56: Trägerkörper
- 100: Verteilmaschine
- 102: Maschinenrahmen
- 104: Räder
- 106: Querbalken
- 108: Ablageeinrichtungen
- 200: Fahrzeug
- α₁, α₂: Umfangsbereiche
- B1a, B1b, B2: Kreisbahnen
- F: Fahrtrichtung
- KB: Kurvenbereich
- M: körniges Material
- R1-R16: Reihen
- ΔK: Korndifferenz

## Patentansprüche

1. Verteileinrichtung (10) für eine pneumatisch arbeitende landwirtschaftliche Verteilmaschine (100), mit
- einer Verteilkammer (22), welche einen Einlass (40) und mehrere Auslässe (44) aufweist, und
- einem in der Verteilkammer (22) angeordneten Verteilrotor (34), welcher dazu eingerichtet ist, im Betrieb der Verteilmaschine (100) eine Rotationsbewegung auszuführen und über den Einlass (40) in die Verteilkammer (22) einströmendes körniges Material (M) auf die Auslässe (44) der Verteilkammer (22) zu verteilen,
wobei der Verteilrotor (34) eine Mehrzahl von sich nach außen erstreckenden Leitelementen (46, 54) aufweist, welche zumindest über einen Großteil des Umfangs, insbesondere vollumfänglich, um einen sich an den Einlass (40) der Verteilkammer (22) anschließenden Einströmbereich (42) in der Verteilkammer (22) herum angeordnet sind,
**dadurch gekennzeichnet, dass**
- radial innenliegende Endabschnitte einer ersten Gruppe von Leitelementen (46) auf einer ersten gemeinsamen Kreisbahn (B1a) angeordnet sind, und
- radial innenliegende Endabschnitte einer zweiten Gruppe von Leitelementen (54) auf einer zweiten gemeinsamen Kreisbahn (B1b) angeordnet sind,
wobei die zweite Kreisbahn (B1b) einen größeren Durchmesser aufweist als die erste Kreisbahn (B1a).

2. Verteileinrichtung (10) nach Anspruch 1,
**dadurch gekennzeichnet, dass** mehrere oder sämtliche Leitelemente (46, 54) gleichmäßig um den Einströmbereich (42) herum verteilt angeordnet sind.

3. Verteileinrichtung (10) nach einem der vorstehenden Ansprüche,
**dadurch gekennzeichnet, dass**
- radial außenliegende Endabschnitte von mehreren oder sämtlichen Leitelementen (46, 54) auf einer gemeinsamen Kreisbahn (B2) angeordnet sind.

4. Verteileinrichtung (10) nach einem der vorstehenden Ansprüche,
**dadurch gekennzeichnet, dass** mehrere oder sämtliche Leitelemente (46, 54) gekrümmt und/oder als Leitschaufeln ausgebildet sind.

5. Verteileinrichtung (10) nach einem der vorstehenden Ansprüche,
**dadurch gekennzeichnet, dass** der Verteilrotor (34) einen, insbesondere umlaufenden, Trägerkörper (56) aufweist, von welchem die Leitelemente (46, 54) getragen werden.

6. Verteileinrichtung (10) nach einem der vorstehenden Ansprüche,
**dadurch gekennzeichnet, dass** die Leitelemente (46, 54) zwischen einer Deckelplatte (48) und einer Bodenplatte (50) des Verteilrotors (34) angeordnet sind,
wobei Deckelplatte (48) eine der Bodenplatte (50) zugewandte Begrenzungsfläche aufweist, welche zumindest abschnittweise den Strömungsbereich für das körnige Material (M) innerhalb des Verteilrotors (34) nach oben hin begrenzt; und
wobei Bodenplatte (50) eine der Deckelplatte (48) zugewandte Begrenzungsfläche aufweist, welche zumindest abschnittweise den Strömungsbereich für das körnige Material (M) innerhalb des Verteilrotors (34) nach unten hin begrenzt.

7. Verteileinrichtung (10) nach einem der vorstehenden Ansprüche,
**gekennzeichnet durch** eine Steuerungseinrichtung, welche dazu eingerichtet ist, einen Rotorantrieb (36) des Verteilrotors (34) und/oder die Rotationsgeschwindigkeit des Verteilrotors (34) in Abhängigkeit der Neigung der Verteileinrichtung (10) oder der Verteilmaschine (100) und/oder in Abhängigkeit der Fahrgeschwindigkeit zu steuern.

8. Verteileinrichtung (10) nach einem der vorstehenden Ansprüche,
**gekennzeichnet durch** einen in den Einströmbereich (42) hineinragenden Prallkörper (52), welcher dazu eingerichtet ist, eine Vorverteilung des in die Verteilkammer (22) einströmenden körnigen Materials (M) in Richtung der Leitelemente (46, 54) und/oder eine Zentrierung einer das körnige Material (M) umfassenden Material-Luft-Strömung zu verursachen.

9. Verteileinrichtung (10) nach einem der vorstehenden Ansprüche,
**gekennzeichnet durch** eine Materialrückführeinrichtung (26), welche dazu eingerichtet ist, das auf die Auslässe (44) der Verteilkammer (22) verteilte körnige Material (M) zumindest teilweise zu dem Einlass (40) der Verteilkammer (22) zurückzuführen.

10. Verfahren zum Betreiben einer Verteileinrichtung (10) nach einem der vorstehenden Ansprüche einer pneumatisch arbeitenden landwirtschaftlichen Verteilmaschine (100) mit dem Schritt:
- Verteilen von über einen Einlass (40) in eine Verteilkammer (22) der Verteileinrichtung (10) einströmendem körnigen Material (M) auf mehrere Auslässe (44) der Verteilkammer (22) mittels eines in der Verteilkammer (22) angeordneten und rotierenden Verteilrotors (34),
wobei das körnige Material (M) durch eine Mehrzahl von Leitelementen (46, 54) des Verteilrotors (34), welche um einen sich an den Einlass (40) der Verteilkammer (22) anschließenden Einströmbereich (42) in der Verteilkammer (22) herum angeordnet sind, derart geführt wird, dass das körnige Material (M) gleichzeitig entlang zumindest eines Großteils des Umfangs, insbesondere entlang des gesamten Umfangs, des Verteilrotors (34) in Richtung der mehreren Auslässe (44) der Verteilkammer (22) abgegeben wird.

11. Verfahren nach Anspruch 10,
**gekennzeichnet durch** den Schritt:
- Steuern eines den Verteilrotor (34) antreibenden Rotorantriebs (36) der Verteileinrichtung (10) und/oder der Rotationsgeschwindigkeit des Verteilrotors (34) in Abhängigkeit der aktuellen Ausbringsituation.

12. Verfahren nach Anspruch 11,
**dadurch gekennzeichnet, dass** beim Steuern eines Rotorantriebs (36) und/oder der Rotationsgeschwindigkeit des Verteilrotors (34) in Abhängigkeit der aktuellen Ausbringsituation die Bestromung des Rotorantriebs (36) und/oder die Rotationsgeschwindigkeit des Verteilrotors (34) an die Neigung der Verteileinrichtung (10) oder der Verteilmaschine (100) und/oder an die Fahrgeschwindigkeit angepasst wird.

13. Verfahren nach einem der Ansprüche 10 bis 12,
**dadurch gekennzeichnet, dass** das körnige Material (M) durch die Leitelemente (46, 54) des Verteilrotors (34) derart geführt wird, dass das körnige Material (M) in einer vorbestimmten Mengenverteilung in Richtung der Auslässe (44) abgegeben wird.

## Claims

1. Distribution device (10) for a pneumatically operated agricultural distribution machine (100), comprising
- a distribution chamber (22) having an inlet (40) and a plurality of outlets (44), and
- a distribution rotor (34) which is arranged in the distribution chamber (22) and is designed to perform a rotational movement during operation of the distribution machine (100) and to distribute granular material (M) flowing into the distribution chamber (22) via the inlet (40) to the outlets (44) of the distribution chamber (22),
the distribution rotor (34) having a plurality of outwardly extending guide elements (46, 54) which are arranged at least over a large part of the circumference, in particular the entire circumference, around an inflow region (42) in the distribution chamber (22) which adjoins the inlet (40) of the distribution chamber (22),
**characterized in that**
- radially inner end portions of a first group of guide elements (46) are arranged on a first common circular path (B1a), and
- radially inner end portions of a second group of guide elements (54) are arranged on a second common circular path (B1b),
wherein the second circular path (B1b) has a larger diameter than the first circular path (B1a).

2. Distribution device (10) according to claim 1,
**characterized in that** a plurality or all of the guide elements (46, 54) are evenly distributed around the inflow region (42).

3. Distribution device (10) according to any of the preceding claims,
**characterized in that**
- radially outer end portions of a plurality or all of the guide elements (46, 54) are arranged on a common circular path (B2).

4. Distribution device (10) according to any of the preceding claims,
**characterized in that** a plurality or all of the guide elements (46, 54) are curved and/or designed as guide vanes.

5. Distribution device (10) according to any of the preceding claims,
**characterized in that** the distribution rotor (34) has an in particular circumferential carrier body (56) by which the guide elements (46, 54) are carried.

6. Distribution device (10) according to any of the preceding claims,
**characterized in that** the guide elements (46, 54) are arranged between a cover plate (48) and a base plate (50) of the distribution rotor (34),
wherein the cover plate (48) has a boundary surface which faces the base plate (50) and which at least partially delimits the flow region for the granular material (M) within the distribution rotor (34) at the top; and
wherein the base plate (50) has a boundary surface which faces the cover plate (48) and which at least partially delimits the flow region for the granular material (M) within the distribution rotor (34) at the bottom.

7. Distribution device (10) according to any of the preceding claims,
**characterized by** a control device which is designed to control a rotor drive (36) of the distribution rotor (34) and/or the rotational speed of the distribution rotor (34) according to the inclination of the distribution device (10) or the distribution machine (100) and/or according to the travel speed.

8. Distribution device (10) according to any of the preceding claims,
**characterized by** an impact body (52) which projects into the inflow region (42) and is designed to cause a pre-distribution of the granular material (M) flowing into the distribution chamber (22) in the direction of the guide elements (46, 54) and/or a centering of a material-air flow comprising the granular material (M).

9. Distribution device (10) according to any of the preceding claims,
**characterized by** a material return device (26) which is designed to return the granular material (M) distributed to the outlets (44) of the distribution chamber (22) at least partially to the inlet (40) of the distribution chamber (22).

10. Method for operating a distribution device (10) according to any of the preceding claims of a pneumatically operated agricultural distribution machine (100), comprising the step of:
- distributing granular material (M) flowing into a distribution chamber (22) of the distribution device (10) via an inlet (40) to a plurality of outlets (44) of the distribution chamber (22) by means of a distribution rotor (34) arranged and rotating in the distribution chamber (22),
wherein the granular material (M) is guided by a plurality of guide elements (46, 54) of the distribution rotor (34), which are arranged around an inflow region (42) in the distribution chamber (22) which adjoins the inlet (40) of the distribution chamber (22), in such a way that the granular material (M) is discharged simultaneously along at least a large part of the circumference, in particular along the entire circumference, of the distribution rotor (34) in the direction of the plurality of outlets (44) of the distribution chamber (22).

11. Method according to claim 10,
**characterized by** the step of:
- controlling a rotor drive (36) of the distribution device (10) which drives the distribution rotor (34) and/or controlling the rotational speed of the distribution rotor (34) according to the current discharge situation.

12. Method according to claim 11,
**characterized in that,** when controlling a rotor drive (36) and/or the rotational speed of the distribution rotor (34) according to the current discharge situation, the energization of the rotor drive (36) and/or the rotational speed of the distribution rotor (34) is adapted to the inclination of the distribution device (10) or the distribution machine (100) and/or to the travel speed.

13. Method according to any of claims 10 to 12,
**characterized in that** the granular material (M) is guided by the guide elements (46, 54) of the distribution rotor (34) in such a way that the granular material (M) is output in a predetermined quantity distribution in the direction of the outlets (44).

## Revendications

1. Dispositif de distribution (10) pour une machine de distribution (100) agricole à actionnement pneumatique, comportant
- une chambre de distribution (22), laquelle présente une entrée (40) et plusieurs sorties (44), et
- un rotor de distribution (34) agencé dans la chambre de distribution (22), lequel est conçu pour exécuter un mouvement de rotation pendant le fonctionnement de la machine de distribution (100) et pour distribuer du matériau granulaire (M) s'écoulant en entrée dans la chambre de distribution (22) par l'intermédiaire de l'entrée (40) sur les sorties (44) de la chambre de distribution (22),
dans lequel le rotor de distribution (34) présente une pluralité d'éléments de guidage (46, 54) s'étendant vers l'extérieur, lesquels sont agencés dans la chambre de distribution (22) au moins sur une grande partie de la circonférence, en particulier sur toute la circonférence, autour d'une zone d'écoulement en entrée (42) se raccordant à l'entrée (40) de la chambre de distribution (22),
**caractérisé en ce que**
- des sections d'extrémité situées radialement à l'intérieur d'un premier groupe d'éléments de guidage (46) sont agencées sur une première trajectoire circulaire commune (B1a), et
- des sections d'extrémité situées radialement à l'intérieur d'un second groupe d'éléments de guidage (54) sont agencées sur une seconde trajectoire circulaire commune (B1b),
dans lequel la seconde trajectoire circulaire (B1b) présente un diamètre plus grand que la première trajectoire circulaire (B1a).

2. Dispositif de distribution (10) selon la revendication 1,
**caractérisé en ce que** plusieurs ou la totalité des éléments de guidage (46, 54) sont agencés distribués uniformément autour de la zone d'écoulement en entrée (42).

3. Dispositif de distribution (10) selon l'une des revendications précédentes,
**caractérisé en ce que**
- des sections d'extrémité situées radialement à l'extérieur de plusieurs ou de la totalité des éléments de guidage (46, 54) sont agencées sur une trajectoire circulaire commune (B2).

4. Dispositif de distribution (10) selon l'une des revendications précédentes,
**caractérisé en ce que** plusieurs ou la totalité des éléments de guidage (46, 54) sont réalisés incurvés et/ou comme des aubes de guidage.

5. Dispositif de distribution (10) selon l'une des revendications précédentes,
**caractérisé en ce que** le rotor de distribution (34) présente un corps de support (56), en particulier périphérique, par lequel les éléments de guidage (46, 54) sont portés.

6. Dispositif de distribution (10) selon l'une des revendications précédentes,
**caractérisé en ce que** les éléments de guidage (46, 54) sont agencés entre une plaque de couvercle (48) et une plaque de fond (50) du rotor de distribution (34),
dans lequel la plaque de couvercle (48) présente une surface de délimitation tournée vers la plaque de fond (50), laquelle délimite vers le haut, au moins par sections, la zone d'écoulement pour le matériau granulaire (M) à l'intérieur du rotor de distribution (34) ; et
dans lequel la plaque de fond (50) présente une surface de délimitation tournée vers la plaque de couvercle (48), laquelle délimite vers le bas, au moins par sections, la zone d'écoulement pour le matériau granulaire (M) à l'intérieur du rotor de distribution (34).

7. Dispositif de distribution (10) selon l'une des revendications précédentes,
**caractérisé par** un dispositif de commande, lequel est conçu pour commander un entraînement de rotor (36) du rotor de distribution (34) et/ou la vitesse de rotation du rotor de distribution (34) en fonction de l'inclinaison du dispositif de distribution (10) ou de la machine de distribution (100) et/ou en fonction de la vitesse de déplacement.

8. Dispositif de distribution (10) selon l'une des revendications précédentes,
**caractérisé par** un corps d'impact (52) faisant saillie dans la zone d'écoulement en entrée (42), lequel est conçu pour provoquer une pré-distribution du matériau granulaire (M) s'écoulant en entrée dans la chambre de distribution (22) en direction des éléments de guidage (46, 54) et/ou un centrage d'un flux de matériau/air comprenant le matériau granulaire (M).

9. Dispositif de distribution (10) selon l'une des revendications précédentes,
**caractérisé par** un dispositif de retour de matériau (26), lequel est conçu pour renvoyer au moins partiellement le matériau granulaire (M) distribué sur les sorties (44) de la chambre de distribution (22) vers l'entrée (40) de la chambre de distribution (22).

10. Procédé de fonctionnement d'un dispositif de distribution (10) selon l'une des revendications précédentes d'une machine de distribution (100) agricole à actionnement pneumatique, comportant l'étape consistant à :
- distribuer un matériau granulaire (M) s'écoulant en entrée par l'intermédiaire d'une entrée (40) dans une chambre de distribution (22) du dispositif de distribution (10) sur plusieurs sorties (44) de la chambre de distribution (22) par le biais d'un rotor de distribution (34) agencé dans la chambre de distribution (22) et en rotation,
dans lequel le matériau granulaire (M) est guidé par une pluralité d'éléments de guidage (46, 54) du rotor de distribution (34), lesquels sont agencés dans la chambre de distribution (22) autour d'une zone d'écoulement en entrée (42) se raccordant à l'entrée (40) de la chambre de distribution (22), de telle sorte que le matériau granulaire (M) est délivré simultanément le long d'au moins une grande partie de la circonférence, en particulier le long de toute la circonférence, du rotor de distribution (34) en direction des plusieurs sorties (44) de la chambre de distribution (22).

11. Procédé selon la revendication 10,
**caractérisé par** l'étape consistant à :
- commander un entraînement de rotor (36), entraînant le rotor de distribution (34), du dispositif de distribution (10) et/ou la vitesse de rotation du rotor de distribution (34) en fonction de la situation d'épandage actuelle.

12. Procédé selon la revendication 11,
**caractérisé en ce que** lors de la commande d'un entraînement de rotor (36) et/ou de la vitesse de rotation du rotor de distribution (34) en fonction de la situation d'épandage actuelle, l'alimentation en courant de l'entraînement de rotor (36) et/ou la vitesse de rotation du rotor de distribution (34) est adaptée à l'inclinaison du dispositif de distribution (10) ou de la machine de distribution (100) et/ou à la vitesse de déplacement.

13. Procédé selon l'une des revendications 10 à 12,
**caractérisé en ce que** le matériau granulaire (M) est guidé par les éléments de guidage (46, 54) du rotor de distribution (34) de telle sorte que le matériau granulaire (M) est délivré selon une distribution quantitative prédéterminée en direction des sorties (44).
